# EUROPEAN PATENT APPLICATION

(11) **EP 2 782 024 A1**
(43) Date of publication of application: **24.09.2014**
(21) Application number: 11873788.1
(22) Date of filing: 17.11.2011
(51) Int. Cl.: G06F 17/21

(54) **TWEET CREATION ASSISTANCE DEVICE**

(71) Applicant: TOYOTA JIDOSHA KABUSHIKI KAISHA, Toyota-shi, Aichi-ken, 471-8571 (JP)
(72) Inventor: NANBA, Toshiyuki, Aichi 471-8571 (JP)
(74) Representative: Kuhnen & Wacker
(86) International application number: PCT/JP2011/076575
(87) International publication number: WO 2013/073040

(57) **Abstract**

A tweet making assist apparatus for assisting in making a tweet to be posted by a Twitter-compliant site is disclosed. The tweet making assist apparatus includes a processor. The processor detects a surrounding environment of a user and provides an output which promotes the user to make a tweet. Preferably, the processing device provides the output which promotes the user to make a tweet if the surrounding environment of the user has changed.

## Description

### Technical Field

The present invention is related to a tweet making assist apparatus for assisting in making a tweet to be posted by a Twitter-compliant site.

### Background Art

From Patent Document 1, a configuration is known in which a user is invited to select a desired form sentence from plural form sentences displayed on a display device, and the selected sentence is input into a text inputting apparatus. The text inputting apparatus has a function of registering a sentence, which is input frequently by a user, as the form sentence, and a function of registering a sentence made by a user.

[Patent Document 1] Japanese Laid-open Patent Publication No. 2011-191910

### Disclosure of Invention

### Problem to be Solved by Invention

Recently, a communication service called "Twitter (registered trademark)" is known in which a user posts a short sentence called "a tweet" which can be browsed by other users (for example, followers).

An object of the present invention is to provide a tweet making assist apparatus which can effectively assist in making a tweet to be posted by a Twitter-compliant site.

### Means to Solve the Problem

According to an aspect of the present invention, a tweet making assist apparatus for assisting in making a tweet to be posted by a Twitter-compliant site is provided, which includes
a processor,
wherein the processor detects a surrounding environment of a user and provides an output which promotes the user to make a tweet.

### Advantage of the Invention

According to the present invention, a tweet making assist apparatus can be obtained which can effectively assist in making a tweet to be posted by a Twitter-compliant site.

### Brief Description of Drawings

Fig. 1 is a diagram for illustrating a fundamental configuration of a tweet making assist apparatus 1.
Fig. 2 is a diagram for illustrating an example of a display screen of a display device 20.
Fig. 3A through 3C are diagrams for illustrating examples of candidate sentences displayed by selecting a menu button 24.
Fig. 4 is a diagram for illustrating an example of a display screen of the display device 20 when a processing device 10 provides an output which promotes the user to make a tweet.
Fig. 5 is a diagram for illustrating an example of a tweet which the processing device 10 makes based on a reply from a user illustrated in Fig. 4.
Fig. 6 is an example of a flowchart of a main process executed by the processing device 10 according to the embodiment.
Fig. 7 is another example of a flowchart of a main process which may be executed by the processing device 10 according to the embodiment.

### Description of Reference Symbols

- 1: tweet making assist apparatus
- 10: processing device
- 20: display device
- 22: status display
- 24: menu button
- 24a, 24b, 24c: buttons
- 26: promotion display
- 28: speech recognition result display
- 30: input device
- 40: navigation device

### Best Mode for Carrying Out the Invention

In the following, the best mode for carrying out the present invention will be described in detail by referring to the accompanying drawings.

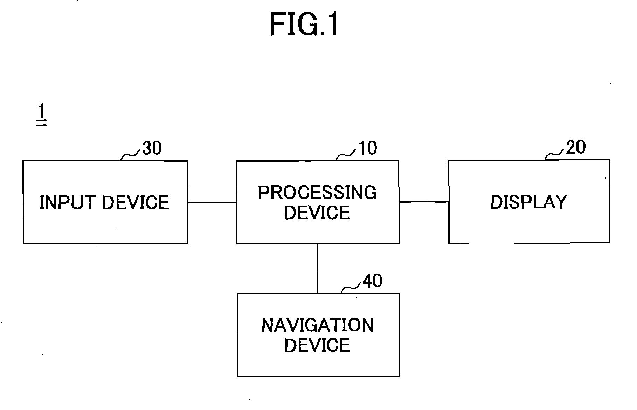

Fig. 1 is a diagram for illustrating a fundamental configuration of a tweet making assist apparatus 1. The tweet making assist apparatus 1 is installed on a vehicle. The tweet making assist apparatus 1 includes a processing device 10.

The processing device 10 may be configured by a processor including a CPU. The processing device 10 has a function of accessing a network to post a tweet. The respective functions of the processing device 10 (including functions described hereinafter) may be implemented by any hardware, any software, any firmware or any combination thereof. For example, any part of or all of the functions of the processing device 10 may be implemented by an ASIC (application-specific integrated circuit), a FPGA (Field Programmable Gate Array) or a DSP (digital signal processing device). Further, the processing device 10 may be implemented by plural processing devices.

The processing device 10 is connected to a display device 20. It is noted that the connection between the processing device 10 and the display device 20 may be a wired connection or a wireless connection, and may be a direct connection or an indirect connection. Further, a part or all of the functions of the processing device 10 may be implemented by a processing device (not illustrated) which may be installed in the display device 20.

The display device 20 may be an arbitrary display device such as a liquid crystal display and a HUD (Head-Up Display). The display device 20 may be placed at an appropriate location in the vehicle (at the lower side of the center portion of an instrument panel, for example).

The processing device 10 is connected to an input device 30. It is noted that the connection between the processing device 10 and the input device 30 may be a wired connection or a wireless connection, and may be a direct connection or an indirect connection.

The input device 30 is an arbitrary user interface, and may be a remote controller, switches (for example, cross-shaped cursor keys) provided on a steering wheel, a touch panel or the like. The touch panel may be incorporated into the display device 20, for example. Further, the input device 30 may include a speech recognition device which recognizes the input of the speech of a user.

The processing device 10 is connected to a navigation device 40. It is noted that the connection between the processing device 10 and the navigation device 40 may be a wired connection or a wireless connection, and may be a direct connection or an indirect connection. Further, a part or all of the functions of the processing device 10 may be implemented by a processing device (not illustrated) which may be installed in the navigation device 40.

The navigation device 40 may include a GPS (Global Positioning System) receiver, a beacon receiver, a FM multiplex receiver, etc., for acquiring host vehicle position information, traffic jam information or the like. Further, the navigation device 40 has map data stored in a recording media such as a DVD, a CD-ROM or the like. The map data may include coordinate information of nodes corresponding to intersections and merge/junction points of highways, link information connecting to the adjacent nodes, information on a width of roads corresponding to the respective links, information on a road type of the respective links, such as a national road, a prefecture road, a highway or the like.

The processing device 10 detects the surrounding environment based on the information from the navigation device 40 and assists in making a tweet to be posted by a Twitter-compliant site via the display device 20 based on the detection result, as described hereinafter.

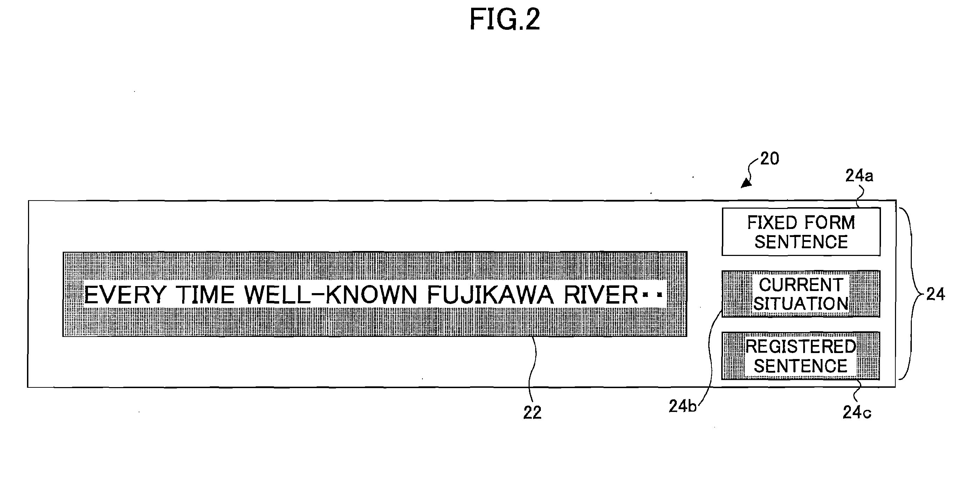

Fig. 2 is a diagram for illustrating an example of a display screen of the display device 20. In the example illustrated in Fig. 2, the display on the display screen of the display device 20 includes a status display 22 and a menu button 24. In the status display 22, selected candidate sentence(s) described hereinafter, a time series of posted tweets, etc., may be displayed. The menu button 24 includes a button 24a which is to be selected for displaying fixed form sentence(s), a button 24b which is to be selected for displaying candidate sentence(s) related to the current situation and a button 24c which is to be selected for displaying registered sentence(s) or term(s). It is noted that the buttons (the buttons 24a, 24b and 24c, for example) displayed on the display 20 are software-based buttons (which means that these buttons are not mechanical ones) to be operated via the input device 30.

The user can select desired button 24a, 24b or 24c of the menu button 24 on the image screen illustrated in Fig. 2 using the input device 30. For example, according to the example illustrated in Fig. 2, the button 24a for displaying the fixed form sentence is in the selected status (highlighted status). If the user wants to call the fixed form sentence, the user presses down the center (determination operation part) of the cross-shaped cursor keys of a steering switch unit, for example. If the user wants to call the candidate sentence related to the current situation, the user presses down the center of the cross-shaped cursor keys of the steering switch unit after pressing down the bottom side key of the cross-shaped cursor keys once, for example. If the user wants to call the registered sentence, the user presses down the center of the cross-shaped cursor keys of the steering switch unit after pressing down the bottom side key of the cross-shaped cursor keys twice, for example.

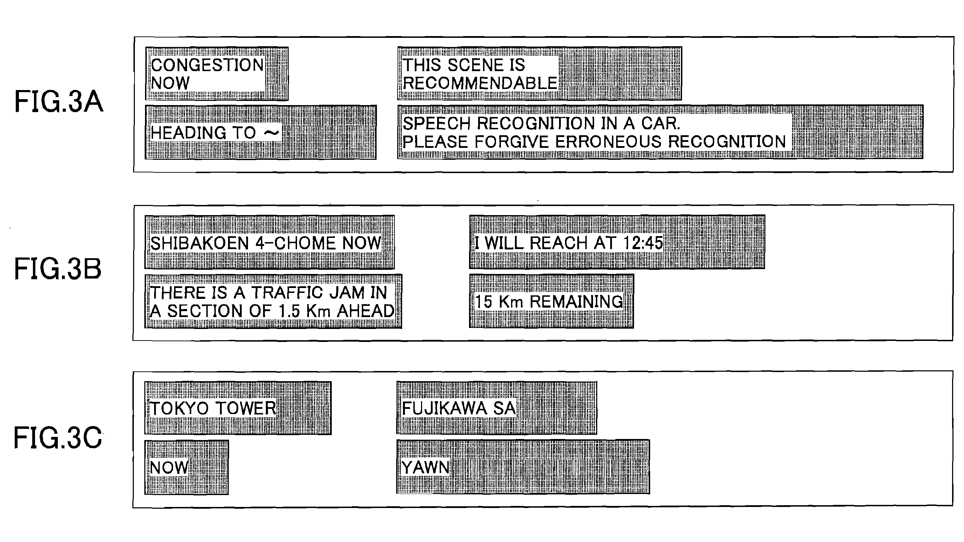

Fig. 3A through 3C are diagrams for illustrating examples of the candidate sentences displayed by selecting the menu button 24 wherein Fig. 3A illustrates an example of the fixed form sentences displayed when the button 24a is selected, Fig. 3B illustrates an example of the candidate sentences displayed when the button 24b is selected, and Fig. 3C illustrates an example of the registered sentences displayed when the button 24c is selected.

The fixed form sentences may include sentences which may be tweeted in the vehicle by the user, as illustrated in Fig. 3A. These fixed form sentences are prepared in advance. The fixed form sentences may display such that the fixed form sentences which were used frequently in the past are displayed with higher priority with respect to other fixed form sentences. In the example illustrated in Fig. 3A, if there is a desired fixed form sentence for the user, the user will select the desired fixed form sentence by operating the cross-shaped cursor keys of the steering switch unit, for example. Further, in the case of a configuration where a number of the fixed form sentences are displayed over plural pages, if there is not a desired fixed form sentence for the user, the user may call the fixed form sentences on the next page by operating the cross-shaped cursor keys of the steering switch unit, for example.

The candidate sentences may include the sentence related to the current situation surrounding the vehicle, as illustrated in Fig. 3B. The candidate sentences may include the present time, the current address of the vehicle position (Shibakoen 4-chome in the illustrated example), the predicted destination arrival time (12:45 in the illustrated example), the traffic jam information ("there is a traffic jam in a section of 1.5 km ahead", in the illustrated example), the distance to the destination (1.5 km in the illustrated example), etc., for example. These information items may provided from the navigation device 40. In other words, the current address of the vehicle position may be based on the host vehicle position information of the navigation device 40, and the predicted destination arrival time and the distance to the destination may be based on the destination set in the navigation device 40 and the map data in the navigation device 40. Further, the predicted destination arrival time may be calculated by considering the traffic jam information. Further, the traffic jam information may be based on the VICS (Vehicle Information and Communication System)(registered trademark) information acquired by the navigation device 40.

The candidate sentences related to the current situation surrounding the vehicle may include names of the buildings (towers, buildings, statues, tunnels, etc), shops (restaurants such as a ramen restaurant, etc) and natural objects (mountains, rivers, lakes, etc). Further, the candidate sentences related to the current situation surrounding the vehicle may includes name of the road on which the vehicle is currently traveling. Such kind of information may also be acquired from the navigation device 40.

Similarly, in the example illustrated in Fig. 3B, if there is a desired candidate sentence for the user, the user will select the desired candidate sentence by operating the cross-shaped cursor keys of the steering switch unit, for example. Further, in the case of a configuration where a number of the candidate sentences are displayed over plural pages, if there is not a desired candidate sentence for the user, the user may call the candidate sentences on the next page by operating the cross-shaped cursor keys of the steering switch unit, for example.

The registered sentences may include sentences or terms defined by the user, as illustrated in Fig. 3C. The registered sentences may be registered using the input device 30, or may be downloaded via recording mediums or communication lines.

Similarly, in the example illustrated in Fig. 3C, if there is a desired registered sentence for the user, the user will select the desired registered sentence by operating the cross-shaped cursor keys of the steering switch unit, for example. Further, in the case of a configuration where a number of the registered sentences are displayed over plural pages, if there is not a desired registered sentence for the user, the user may call the registered sentences on the next page by operating the cross-shaped cursor keys of the steering switch unit, for example.

The processing device 10 generates the tweet which can be posted finally using the candidate sentence, etc., thus selected. The generation of the tweet may be performed when the user selects an auto generation button (not illustrated) displayed on the display screen of the display 20 after the user selects the candidate sentence, etc., for example. If there are two or more selected candidate sentences, etc., the processing device 10 generates the tweet by combining these selected candidate sentences, etc. At that time, the selected candidate sentences, etc., may be merely connected, or may be edited and combined. For example, if the fixed form sentence "I'm heading to", the candidate sentence "There is a traffic jam in a section of 1.5 km ahead" and the registered sentence "Tokyo tower" are selected, such a tweet "I'm heading to Tokyo tower. There is a traffic jam in a section of 1.5 km ahead" may be made or such a tweet of the edited and combined version "I'm heading to Tokyo tower. But I'll be late because of a traffic jam in a section of 1.5 km ahead" may be made. It is noted that the tweet, which is thus generated automatically, may be modified according to the input from the user via the input device 30. Further, the final posting of the tweet may be performed when the user selects a posting button (not illustrated) prepared on the display screen of the display 20.

Here, the timing of tweeting varies according to the users; however, the users can easily tweet if they are given some opportunities. In particular, there are some users who have no idea what kind of messages they should submit during the traveling of the vehicle. Therefore, according to the embodiment, the processing device 10 detects the surrounding environment based on the information from the navigation device 40 and provides an output which promotes the user to make the tweet based on the detection result.

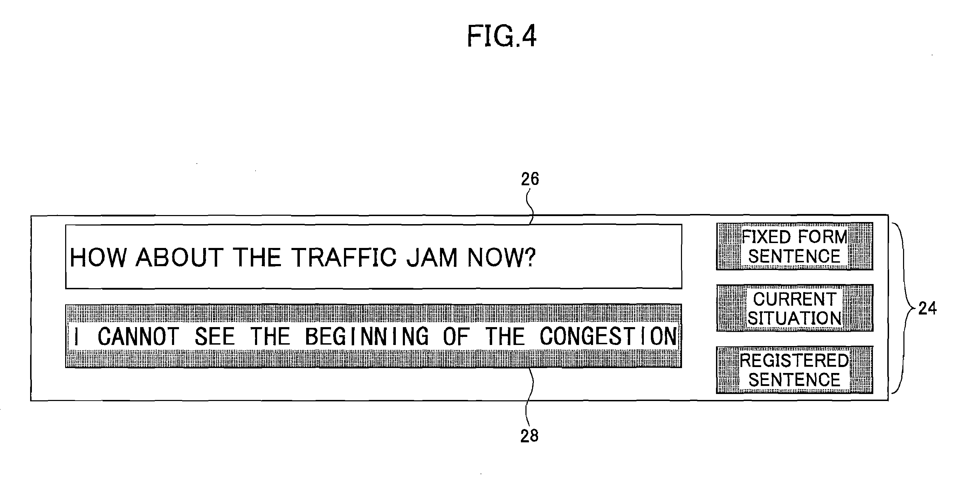

Fig. 4 is a diagram for illustrating an example of a display screen of the display 20 when the processing device 10 provides the output which promotes the user to make the tweet. In the example illustrated in Fig. 4, the display on the display screen of the display 20 includes the menu button 24, a promotion display 26 and a speech recognition result display 28.

The promotion display 26 may include an inquiry or a question ("an inquiry" is used as a representative) related to the current situation surrounding the vehicle. In the example illustrated in Fig. 4, it is assumed that the current situation surrounding the vehicle corresponds to the situation where the vehicle enters the traffic jam section. In this case, the promotion display 26 may be the inquiry "How about the traffic jam now?" This is an output which has the user provide the information used to make the tweet, and thus different from such kind of output which promotes the generation of the tweet without providing any direction, such as an output "Please tweet something now". With this arrangement, the users can tweet as if they were replying to the inquiry, and the twitter becomes friendly for the users who are not used to the twitter. However, the promotion display 26 may be an output which promotes the user to make the tweet related to the surrounding environment of the vehicle (the output which gives the users a direction) such as "Please tweet something about this traffic jam now".

In the example illustrated in Fig. 4, an example is assumed in which the user provides the reply (answer) "I cannot see the beginning of the congestion" to the inquiry "How about the traffic jam now?" In this case, as illustrated in Fig. 4, the speech recognition result "I cannot see the beginning of the congestion" is displayed as a speech recognition result display 28. The processing device 10 makes the tweet which can be posted finally based on this reply from the user. The generation of the tweet may be performed when the user selects the auto generation button (not illustrated) displayed on the display screen of the display 20 after the speech recognition result display 28 is output, for example.

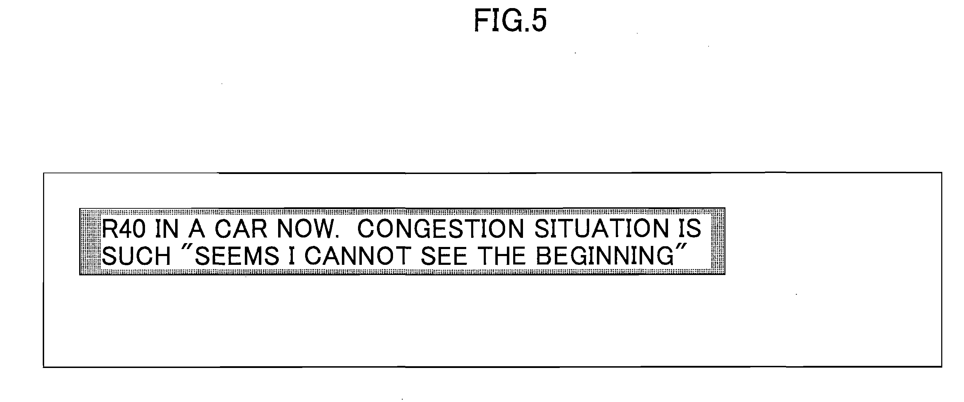

Fig. 5 is a diagram for illustrating an example of the tweet which the processing device 10 makes based on the reply from a user illustrated in Fig. 4.

In the example illustrated in Fig. 5, the reply from the user "I cannot see the beginning of the congestion" is used in the part "seems I cannot see the beginning". Specifically, the reply from the user "I cannot see the beginning of the congestion" is used to fill the blank portion in the bracket ("seems I cannot see the beginning"). In this way, the tweet can be made effectively such that only the blank portion is filled by the speech from the user. It is noted that in the example illustrated in Fig. 5, "R40" is a user name.

It is noted that, in the example illustrated in Fig. 5, the processing device 10 edits the reply from the user to make the tweet; however, the tweet may be made by directly using the reply from the user in the blank portion as it is.

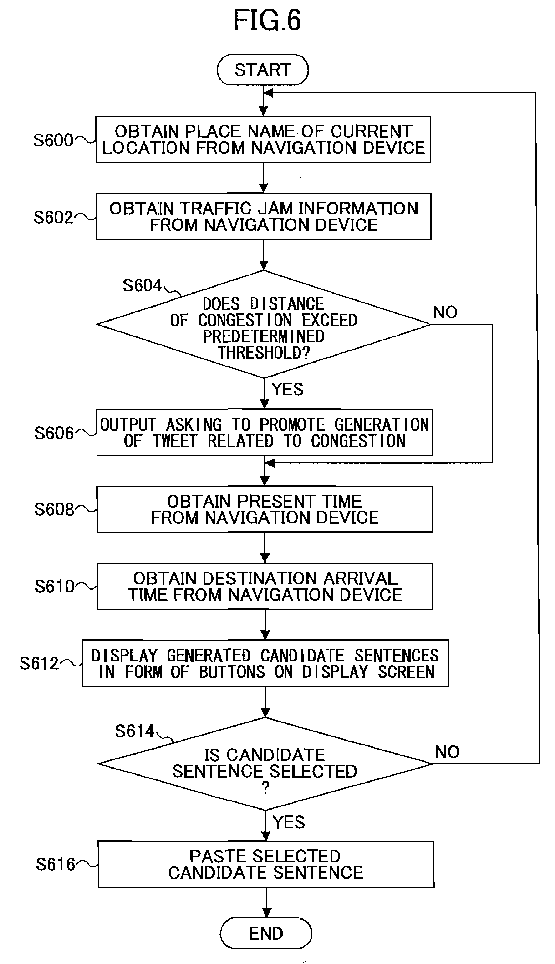

Fig. 6 is an example of a flowchart of a main process executed by the processing device 10 according to the embodiment.

In step 600, the place name of the current location (the address or the like) is obtained from the navigation device 40. It is noted that the place name of the current location may be derived based on the map data of the navigation device 40 and the host vehicle position information.

In step 602, the traffic jam information is obtained from the navigation device 40. The traffic jam information may be data of Level 1 (text information) from the VICS (registered trademark), for example.

In step 604, it is determined whether the distance of the congestion exceeds a predetermined threshold based on the traffic jam information obtained in step 602. The threshold may be a fixed value or a variable value (varying according to the road type, for example). Further, the threshold may be set freely by the user. If the distance of the congestion exceeds the threshold, the process routine goes to step 606. On the other hand, if the distance of the congestion does not exceed the threshold, the process routine goes to step 608. It is noted that if the distance of the congestion does not exceed the threshold, the process routine may return to step 600.

In step 606, the inquiry is output to promote the generation of the tweet related to the congestion (see numeral reference 26 in Fig. 4).

In step 608, the information about the present time is obtained from the navigation device 40.

In step 610, the information about the destination arrival time is obtained from the navigation device 40.

In step 612, the candidate sentences representing the current situation (see Fig. 3B) are generated based on the information obtained in steps 608 and 610. The generated candidate sentences may be output in the form of the buttons on the display screen of the display 20, as illustrated in Fig. 3B.

In step 614, it is determined whether any of the buttons of the candidate sentences output on the display screen of the display 20 is selected. If a predetermined time has elapsed without any button being selected, the process routine may return to step 600. If the button is selected, the process routine goes to step 616. It is noted that plural buttons may be selected (i.e., plural candidate sentences may be selected).

In step 616, the tweet is made by pasting the candidate sentence selected in step 616 and the tweet thus made is presented to the user (see Fig. 5). At that time, the tweet to be posted may be modified according to the input from the user via the input device 30. Further, the final posting of the tweet may be performed when the user selects a posting button (not illustrated) prepared on the display screen of the display 20.

According to the process illustrated in Fig. 6, after the inquiry to promote the generation of the tweet related to the congestion is output in step 606, the candidate sentences related to the current surrounding environment (the congestion) are generated based on the information obtained from the navigation device 40 and the tweet thus made is presented to the user. With this arrangement, the user can obtain assistance in making the tweet by selecting the candidate sentence (replying to the inquiry). It is noted that, also in the process routine illustrated in Fig. 6, after the inquiry to promote the generation of the tweet related to the congestion is output in step 606, a status in which the possible reply from the user can be received may be formed by turning on the speech recognition device. In this case, if the reply of the speech from the user is received, the tweet may be made based on the reply from the user as is described above with reference to Fig. 4 and Fig. 5.

Further, according to the process illustrated in Fig. 6, the candidate sentences are generated and displayed in the form of the buttons, after the inquiry to promote the generation of the tweet related to the congestion is output in step 606; however, such a configuration is also possible in which the candidate sentences are generated before the inquiry to promote the generation of the tweet related to the congestion is output in step 606, and the candidate sentences are displayed in the form of the buttons simultaneously with outputting the inquiry to promote the generation of the tweet related to the congestion in step 606. Alternatively, as is described above with reference to Fig. 2, Fig. 3, etc., the candidate sentences may not be displayed until the button 24b (see Fig. 2) for displaying the candidate sentence related to the current situation is selected by the user.

It is noted that according to the process illustrated in Fig. 6, the inquiry to promote the generation of the tweet is output at the beginning of the congestion (at the time of entering the congestion section); however, the inquiry to promote the generation of the tweet may be output in the middle of the congestion section or at the end of the congestion. Further, in the case of congestion due to a traffic accident, for example, the inquiry to promote the generation of the tweet may be output when the vehicle passes near the accident place, because the current situation of the accident is of interest to the drivers of the following vehicles.

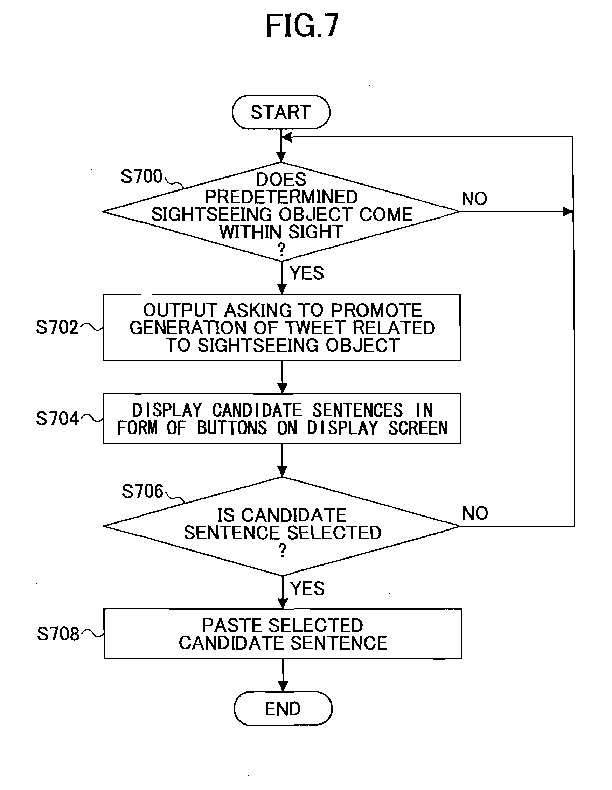

Fig. 7 is another example of a flowchart of a main process which may be executed by the processing device 10 according to the embodiment.

In step 700, it is determined based on the information from the navigation device 40 whether a predetermined sightseeing object comes within sight of the user (in a typical example, the driver). The predetermined sightseeing objects may include natural objects such as famous mountains, rivers, lakes, etc., and famous artificial objects (towers, remains, etc.). If it is determined that the predetermined sightseeing object comes within sight of the user, the process routine goes to step 702.

In step 702, the inquiry to promote the generation of the tweet related to the sightseeing object detected in step 700 is output. For example, in the case of the sightseeing object being Mt. Fuji, the inquiry such as "How about the appearance of Mt. Fuji today?" is output.

In step 704, the candidate sentences related to the sightseeing object detected in step 700 are generated. The generated candidate sentences may be displayed in the form of the buttons as the candidate sentences representing the current situation (see Fig. 3B). The candidate sentences related to the sightseeing objects may be arbitrary, and predetermined candidate sentences or variable candidate sentences may be used. For example, in the case of the sightseeing object being Mt. Fuji, one or more predetermined candidate sentences such as "Mt. Fuji is not clearly visible today" and "What a superb view of Mt. Fuji!" may be prepared.

The processes of steps 706 and 708 may be the same as the processes of steps 614 and 616 illustrated in Fig. 6, respectively.

According to the process illustrated in Fig. 7, after the inquiry to promote the generation of the tweet related to the sightseeing object is output in step 702, the candidate sentences related to the sightseeing object are generated and presented to the user. With this arrangement, the user can obtain assistance in making the tweet by selecting the candidate sentence to reply to the inquiry. It is noted that, also in the process routine illustrated in Fig. 7, after the inquiry to promote the generation of the tweet related to the sightseeing object is output in step 702, a status in which the possible reply from the user can be received may be formed by turning on the speech recognition device. In this case, if the reply of the speech from the user is received, the tweet may be made based on the reply from the user as is described above with reference to Fig. 4 and Fig. 5.

Further, also in the process routine illustrated in Fig. 7, the processes of step 608 and 610 illustrated in Fig. 6 may be performed. In this case, the candidate sentences including these information items are made separately, or these information items may be incorporated into the candidate sentences related to the sightseeing object, and presented to the user.

According to the tweet making assist apparatus 1 of this embodiment, the following effect among others can be obtained.

As described above, since the inquiry to promote the generation of the tweet related to the surrounding environment of the vehicle is output based on the information from the navigation device 40, the information transmission is adequately triggered considering the feeling of the user who wants to tweet. In particular, when there is a change in the surrounding environment of the vehicle (for example, when the congestion or the sightseeing object comes within sight of the user), this effect becomes significant by outputting the inquiry to promote the generation of the tweet related to the change.

Further, since the candidate sentences related to the surrounding environment of the vehicle are made and the tweet is made by having the user select the candidate sentence, the user can complete the tweet to be posted with simplified operations, which increases convenience.

In the embodiment described above, the surrounding environment of the vehicle in outputting the inquiry to promote the generation of the tweet is detected based on the information from the navigation device 40; however, other information may be used to detect the surrounding environment of the vehicle. For example, the information obtained from various sensors mounted on the vehicle and the information obtained from the outside via the communication can be used. Further, there are various changes in the surrounding environment of the vehicle suited for outputting the inquiry to promote the generation of the tweet. For example, the change in the climate may be utilized. In this case, if the change in the climate around the vehicle as the surrounding environment of the vehicle is detected, based on the information from a rain sensor or a sunshine sensor or the climate information obtained from the outside, for example, the inquiry to promote the generation of the tweet related to the change of the climate may be output. For example, the inquiry "It starts to rain, so how about visibility?" may be output. Further, the change in the surrounding environment of the vehicle may include the timing at which the traveling total time or the traveling total distance reaches a predetermined time or distance. For example, it is determined based on the information from a vehicle speed sensor, a timer or the like that the traveling total time or the traveling total distance reaches a predetermined time or distance, the inquiry to promote the generation of the tweet related to the change may be output.

The present invention is disclosed with reference to the preferred embodiments. However, it should be understood that the present invention is not limited to the above-described embodiments, and variations and modifications may be made without departing from the scope of the present invention.

For example, according to the embodiment, the tweet making assist apparatus 1 is mounted on the vehicle as a vehicle-mounted device; however, the tweet making assist apparatus 1 may be incorporated into devices other than the vehicle-mounted device. For example, the tweet making assist apparatus 1 may be incorporated into a mobile phone such as a smart phone or a mobile terminal such as a tablet terminal. In this case, the tweet making assist apparatus 1 in the mobile phone or the mobile terminal may detect the surrounding environment of the user based on the information from the sensor which is installed on the mobile phone or the mobile terminal or the information from the outside of the mobile phone or the mobile terminal (including the information which the user inputs to the mobile phone or the mobile terminal).

Further, according to the embodiment, the tweet making assist apparatus 1 outputs the inquiry to promote the generation of the tweet by means of the image displayed on the display 20; however, the inquiry to promote the generation of the tweet may be output by means of a voice or speech in addition to or instead of the image.

## Claims

1. A tweet making assist apparatus for assisting in making a tweet to be posted by a Twitter-compliant site, comprising:
a processing device,
wherein the processing device detects a surrounding environment of a user and provides an output which promotes the user to make a tweet based on a detection result.

2. The tweet making assist apparatus of claim 1, wherein the processing device provides the output which promotes the user to make a tweet if the surrounding environment of the user has changed.

3. The tweet making assist apparatus of claim 1 or 2, wherein the output which promotes the user to make a tweet is the output which promotes the user to make a tweet related to the detected surrounding circumstance.

4. The tweet making assist apparatus of any one of claims 1 through 3, further comprising a display device, wherein
the processing device displays, on the display device, the output which promotes the user to make a tweet.

5. The tweet making assist apparatus of any one of claims 1 through 4, further comprising a display device, wherein
the processing device displays, on the display device, a candidate sentence which is used to make the tweet.

6. The tweet making assist apparatus of claim 5, wherein the candidate sentence includes a sentence related to the detected surrounding circumstance.

7. The tweet making assist apparatus of claim 5 or 6, wherein the processing device makes the tweet using the candidate selected by the user.

8. The tweet making assist apparatus of any one of claims 1 through 7, wherein the output which promotes the user to make a tweet includes an inquiry or a question related to the detected surrounding circumstance.

9. The tweet making assist apparatus of any one of claims 1 through 8, wherein the tweet making assist apparatus is installed on a vehicle, and
the surrounding circumstance of the user corresponds to a surrounding circumstance of the vehicle.
